(19) Europäisches Patentamt / European Patent Office / Office européen des brevets

(11) **EP 1 508 087 B1**

(12) **EUROPÄISCHE PATENTSCHRIFT**

(45) Veröffentlichungstag und Bekanntmachung des Hinweises auf die Patenterteilung:
**25.07.2007   Patentblatt 2007/30**

(21) Anmeldenummer: 03755905.1

(22) Anmeldetag: **26.05.2003**

(51) Int Cl.:
*G06F 7/72* *(2006.01)*

(86) Internationale Anmeldenummer:
**PCT/DE2003/001728**

(87) Internationale Veröffentlichungsnummer:
**WO 2003/102757 (11.12.2003 Gazette 2003/50)**

(54) **VERFAHREN UND INTEGRIERTE SCHALTUNG ZUR DURCHFÜHRUNG EINER MULTIPLIKATION MODULO M**

METHOD AND INTEGRATED CIRCUIT FOR CARRYING OUT A MULTIPLICATION MODULO M

PROCÉDÉ ET CIRCUIT INTÉGRÉ POUR METTRE EN OEUVRE UNE MULTIPLICATION MODULO M

(84) Benannte Vertragsstaaten:
**DE FR GB**

(30) Priorität: **28.05.2002   DE 10223853**

(43) Veröffentlichungstag der Anmeldung:
**23.02.2005   Patentblatt 2005/08**

(73) Patentinhaber: **Technische Universität Braunschweig
38106 Braunschweig (DE)**

(72) Erfinder:
• **SCHIMMLER, Manfred
24232 Schönkirchen (DE)**
• **BUNIMOV, Viktor
22049 Hamburg (DE)**

(74) Vertreter: **Lins, Edgar et al
GRAMM, LINS & PARTNER
Theodor-Heuss-Strasse 1
38122 Braunschweig (DE)**

(56) Entgegenhaltungen:
**US-A- 6 151 393          US-B1- 6 366 940**

• **J-F DHEM: "Design of an efficient public-key cryptographic library for RISC-based smart cards - Chapter 2" THESE SOUTENUE EN VUE DE L'OBTENTION DU GRADE DE DOCTEUR EN SCIENCES APPLIQUEES, UNIVERSITE DE LOUVAIN-LA-NEUVE, BELGIQUE, [Online] Mai 1998 (1998-05), Seiten 11-55, XP002212065 Gefunden im Internet: URL:http://users.belgacom.net/dhem/these/t hese_public.pdf> [gefunden am 2001-08-30]**

**Beschreibung**

Die Erfindung betrifft ein Verfahren zur Durchführung einer Multiplikation modulo M von zwei n-stelligen Digitalzahlen X, Y mittels einer integrierten Schaltung, wobei $M < {_m}^n$; X, Y < M ist.

Die Erfindung betrifft ferner eine integrierte Schaltung zur Durchführung des Verfahrens.

Die Durchführung der modularen Multiplikation zweier ganzer Zahlen X*Y mod M ist Bestandteil fast aller kryptographischer public key Verfahren, also z.B. von Verfahren zur Überprüfung der Zugangsberechtigung zu Serviceprogrammen.

Die Überprüfung der Zugangsberechtigung muss innerhalb kürzester Zeit erfolgen, sodass Softwarelösungen zur Durchführung der erforderlichen Berechnungen wegen ihres Zeitbedarfs nicht in Betracht kommen oder aufgrund zu geringer Prozessorkapazität nicht möglich sind.

Als Hardwarelösung wird daher eine integrierte Schaltung eingesetzt, mit der die erforderlichen Rechenschritte ausgeführt werden.

Die klassische Methode zur Multiplikation zweier Binärzahlen besteht darin, jedes Bit $x_i$ des Multiplikanden X mit dem anderen Multiplikanden Y zu multiplizieren ($x_i$ * Y). Die gebildeten Produkte werden stellenrichtig addiert zum Ergebnis X * Y. Zur Bildung des Produkts X * Y mod M wird das gebildete Produkt mit dem reziproken Wert von M multipliziert. Die Vorkommastellen dieses Ergebnisses bilden den Quotienten Q. Die Differenz aus X * Y und Q * M ist das Ergebnis, nämlich der Rest der bei der Bildung des Quotienten aus X * Y mit dem Modulus M entsteht.

Das klassische Berechnungsverfahren führt zu Binärzahlen mit einer hohen Bitzahl und zu einem hohen Zeitverbrauch an Rechenzeit.

Es sind daher Verfahren bekannt, mit denen die erforderliche Addition der Einzelprodukte sofort nach der Bildung der Einzelprodukte erfolgt und darüber hinaus eine Reduktion der Bitlänge der Zwischensummen vorgenommen wird.

Beim Montgomery-Verfahren wird das jeweils gebildete Einzelprodukt zu einer Zwischensumme hinzu addiert und überprüft, ob das geringstwertige Bit "O" ist. Ist dies der Fall, wird dieses Bit durch eine Verschiebeoperation eliminiert, was einer Division durch Zwei entspricht. Ist das letzte Bit der Zwischensumme hingegen "1" wird der Modulus M hinzu addiert, wodurch sich für die Berechnung im Ergebnis nichts ändert, durch den üblicherweise ungeraden Modulus (letztes Bit = 1) jedoch nunmehr eine Zwischensumme mit einem geringstwertigen Bit "0" erzeugt wird, für die die Division durch 2 durchgeführt wird.

Ermittelt wird somit ein Ergebnis $T = X * Y * R^{-1}$ mod M. Es ist somit eine modulare Multiplikation mit $R^2$ mod M (z.B.: $R = 2^n$) erforderlich, die in einer gleichartigen Rechenoperation durchgeführt wird.

Der Aufwand für die Durchführung der Multiplikation erfordert somit zwei Multiplikationsdurchläufe, also einen doppelten Zeitaufwand.

Auch bei der Interleaved Modular Multiplication wird eine modulare Reduktion bei der verschränkten Addition der Einzelergebnisse durchgeführt. Nach jedem Schritt wird überprüft, ob die aktuelle Teilsumme größer als das $2^i$-fache des Modulus M ist. Ist dies der Fall, wird M subtrahiert. Diese Vergleichsoperation wird wiederholt. Danach ist die verbleibende Teilsumme immer kleiner als M. Auf diese Weise wird die bei der Schulmethode erforderliche, rechenaufwendige Division durch jeweils zwei schritthaltende Subtraktionen im Fluss der Berechnungen miterledigt. Da die Zwischenergebnisse nie deutlich größer werden als n Bit, wird erheblich Fläche der integrierten Schaltung eingespart. Problematisch ist allerdings die jeweils erforderliche Vergleichsoperation, die letztendlich eine versteckte Addition (P - M) beinhaltet, die ebenfalls zu einer Erhöhung des Aufwandes und zur Verlängerung der Rechenzeit führt.

Aus der US 6,151,393 ist ein weiterer Algorithmus zur Berechnung einer modularen Multiplikation bekannt, bei dem bereits während der modularen Multiplikation modulare Reduktionen der Zwischenergebnisse durchgeführt werden. Die modularen Reduktionen erfolgen durch Addition vorberechneter Werte, die in Abhängigkeit von den höchstwertigen Stellen der Zwischensumme gewählt-werden. Für die Durchführung des Algorithmus sind in jedem Schritt drei Additionen notwendig, für die drei Carry-Save-Addierer verwendet und nacheinander ausgeführt werden.

Der Erfindung liegt daher die Aufgabe zugrunde, die Durchführung einer Multiplikation modulo M mit den eingangs erwähnten Randbedingungen mit einem geringeren Aufwand an Hardwarefläche und/oder Rechenzeit zu ermöglichen.

Die Aufgabe wird mit einem Verfahren der eingangs erwähnten Art erfindungsgemäß gelöst mit dem Verfahrensschritt:

- Definition von zu einer vorgegebenen Anzahl höchstwertiger Stellen gehörenden Größenklassen und Vorberechnung von m modulo-M-Werten (A) für jede Größenklasse, die aus der Summe jeweils einer der Werte 0, Y, ..., (m-1)*Y und dem der Größenklasse entsprechenden Vielfachen von $m^n$ bestehen

und den iterativen Verfahrensschritten:

- Addition des Wertes A zu einer Zwischensumme zur Bildung eines Additionsergebnisses, wobei der Wert A zur Durchführung der modulo-Operation des Durchlaufs (i) durch Vergleich der höchstwertigen Stellen der Zwischensumme mit den gebildeten Größenklassen und der dem i-ten Durchlauf entsprechenden Ziffer des Operanden xi ausgewählt wird;

- Verwendung der von den höchstwertigen Stellen befreiten letzten n-Stellen dieses Additionsergebnisses zur Multiplikation mit m zur Bildung einer neuen Zwischensumme für die Addition im nächsten Durchlauf (i-1)

sowie

- Ausgabe der für den letzten Durchlauf (i = 0) bei der Addition gebildeten Zwischensumme als Resultat.

Das erfindungsgemäße Verfahren beruht somit im Wesentlichen auf der Durchführung einer Interleaved Multiplication. Problematisch ist bei der Interleaved Multiplication die Reduktion der gebildeten Summe, die unmittelbar verwendet werden kann, wenn die Summe zwischen 0 und dem Modulus M liegt, von der jedoch ein- oder zweimal der Modulus M abgezogen werden muss, wenn die gebildete Zwischensumme > M und < 2 M einerseits bzw. > 2 M andererseits ist. In dem Vergleich liegen versteckte Additionen, sodass sich der Berechnungsaufwand - ähnlich wie bei dem Montgomery-Verfahren - wieder erhöht.

Im vorgeschlagenen Verfahren wird statt der Berechnung des Vergleichs eine approximative Abschätzung vorgenommen, die beispielsweise unter Verwendung der beiden höchstwertigen Bits erfolgt, deren Summe die Werte 0 bis 5 annehmen kann. Diese approximative Abschätzung wird mit vorberechneten Korrekturwerten vorgenommen und ist daher mit geringem Rechenaufwand möglich. Dabei wird anschließend keine Subtraktion mit dem Modulus M vorgenommen, sondern mit dem für die ermittelte Größenklasse vorberechneten Korrekturwert die entsprechende Addition für den nächsten Durchlauf durchgeführt.

Erfindungsgemäß enthalten die vorberechneten Modulo-Werte zusätzlich alle möglichen Werte für $x_i$*Y als Summanden, sodass in einem Additionsschritt modulare Reduktion und Addition der Teilprodukte ausgeführt werden.

Das erfindungsgemäße Verfahren lässt sich somit in einem einzigen Durchlauf ausführen und ermöglicht daher die Ausführung in der halben Rechenzeit. Die Komplexität der Schaltung, also der Bedarf an Fläche auf dem Halbleiterchip, ist gleich groß wie beim Montgomery-Verfahren,

Die oben erwähnte Aufgabe wird ferner gelöst durch eine integrierte Schaltung, die zur Durchführung des erfindungsgemäßen Verfahrens ausgebildet ist und daher einen Multiplizierer zur Bildung der Teilprodukte I, nur einen Addierer und eine Bewertungsstufe zur Bildung einer Summe der höchstwertigen Stellen der Summanden und Auswahl eines vorberechneten Korrekturwerts A enthält, wobei insbesondere die beiden höchstwertigen Stellen verwendet werden.

Die Erfindung lässt sich bevorzugt mit Binärzahlen durchführen, es ist aber auch in analoger Weise möglich, andere Digitalzahlensysteme zu verwenden. Die Verwendung von Digitalzahlen mit höheren Basen, insbesondere von Potenzen von 2, beispielsweise die Basis 8, kann sehr sinnvoll sein, wie dies bereits von dem Montgomery-Verfahren bekannt ist.

Die Additionen werden bei dem erfindungsgemäßen Verfahren vorzugsweise mit einem Carry-Save-Addierer ausgeführt. Die Carry-Save-Addition vermeidet das Arbeiten mit Übertragungsbits und spart dadurch eine erhebliche Rechenzeit.

Die Erfindung soll im Folgenden anhand eines in der Zeichnung dargestellten Ausführungsbeispiels näher erläutert werden. Es zeigen:

Figur 1 - ein Rechenbeispiel für eine herkömmliche modulare Interleaved Multiplication mit dem zugehörigen Algorithmus

Figur 2 - eine Auflistung eines effizienteren Algorithmus für Binärzahlen

Figur 3 - ein Flussdiagramm zur Ausführung des Algorithmus gemäß Figur 2

Figur 4 - eine Auflistung des erfindungsgemäßen Algorithmus für Binärzahlen

Figur 5 - ein Flussdiagramm zur Ausführung des Algorithmus gemäß Figur 4.

Die Durchführung der modularen Multiplikation P := X * Y mod M würde in konventioneller Weise die Rechenschritte

P := X * Y
Q : = P div M
Remainder ; = P - Q * M

erfordern.

Bei dieser Berechnungsart entstehen sehr große Zwischenresultate, was bei der Verwendung von Bitlängen von 1 024 und höher, wie sie für Verschlüsselungszwecke üblich sind, erhebliche Nachteile mit sich bringt. Ferner muss eine Division durchgeführt werden. Die Komplexität und die Rechenzeit sind außerordentlich hoch.

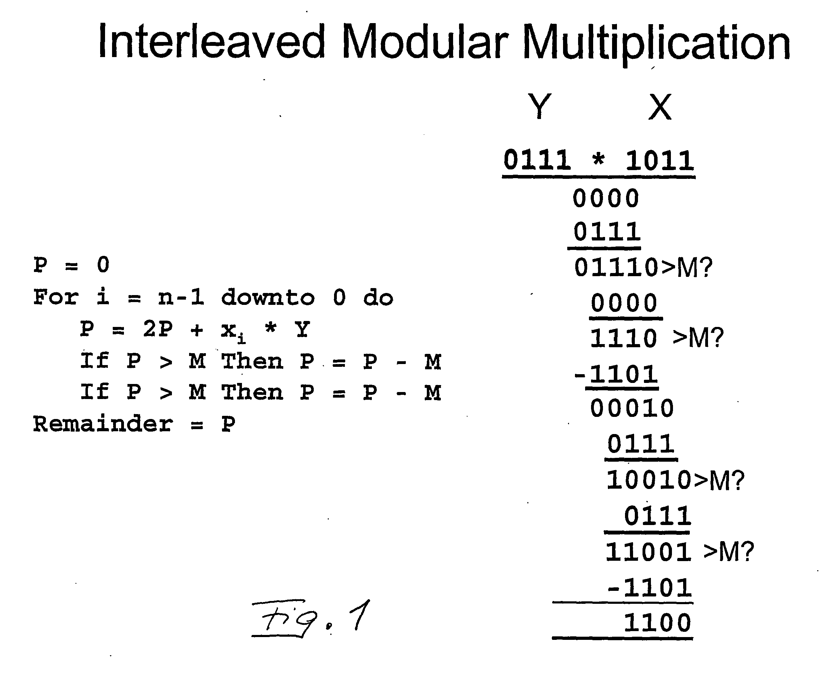

Bei der in Figur 1 dargestellten Interleaved Modular Multiplication wird für jeden Rechenschritt der bitweise durchgeführten Multiplikation eine Addition zu einer Zwischensumme durchgeführt und diese Zwischensumme reduziert, wenn die Zwischensumme größer als der Modulus M ist.

Das in der Zeichnung dargestellte Rechenbeispiel ist für vier Bit-Werte ausgeführt worden. Die erste Zeile der Produktberechnung gibt den Ausgangswert 0000 an. Darunter findet sich das Produkt $x_i$ * Y, im dargestellten Ausführungsbeispiel 0111.

Die jetzt gebildete Summe wird mit dem Modulus M (hier: 1101 = 13) verglichen. Da die Summe P nicht größer als der Modulus M ist, wird die Summe nunmehr durch Anhängen einer 0 als niedrigstwertiger Bit verdoppelt (2 * P).

Nunmehr wird für das zweite Bit die Multiplikation $x_i$ * Y durchgeführt (0000) und eine Summe gebildet. Da die nunmehr gebildete Summe 1110 (= 14) größer als M ist, wird M im Folgenden abgezogen. Die so gebildete Summe P wird nunmehr wieder verdoppelt durch Anhängen einer 0 als niedrigstwertigen Bit. Es folgt dann die Berechnung $x_i$ * Y für das dritte Bit usw. Nach Abarbeitung aller vier Bits entsteht der Wert P 1100 (= 12) als Rest, der den Wert X * Y mod M angibt, wobei im Ausführungsbeispiel Y 0111 (= 7) und X 1011 (= 11) ist. Es ergibt sich somit das zutreffende Ergebnis 7 * 11 mod 13 = 12.

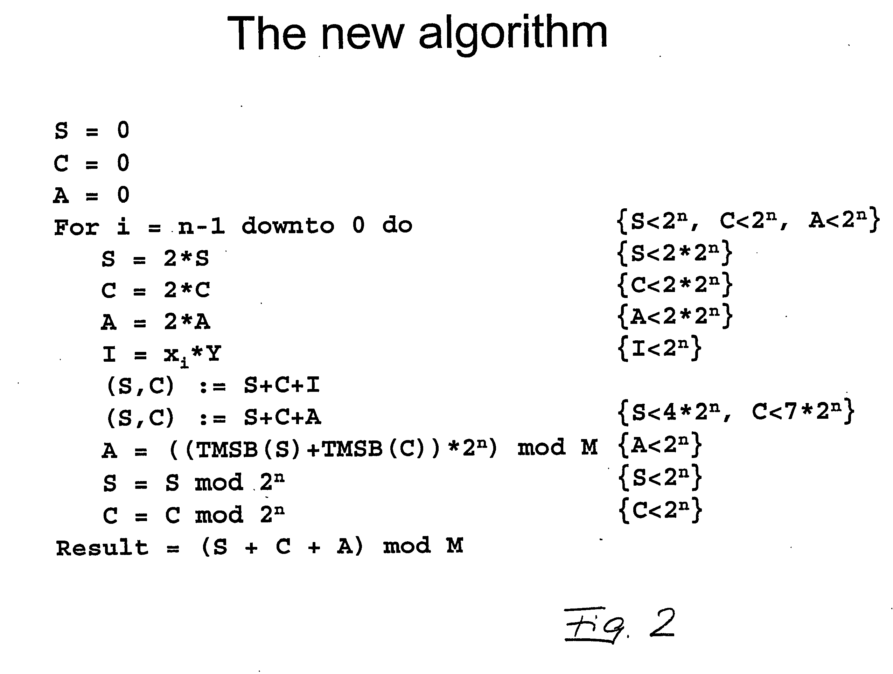

Der in Figur 2 dargestellte effizientere Algorithmus baut auf dem Prinzip der Interleaved Multiplication auf, verwendet jedoch eine Carry-Save-Addition (CSA) mit Summanden S, C und A.

Die Summanden werden auch beim Algorithmus verdoppelt und es wird eine Summation zu den bitweise ermittelten Zwischenprodukten $x_i$ * Y vorgenommen. Zur Reduktion werden die beiden höchstwertigen Bits des Summanden S und des Summanden C für die zweite Carry-Save-Addition addiert und zu einem Wert gebildet, der durch Anhängen von n Bits mit dem Wert 0 entsteht. Anders ausgedrückt werden die n niedrigstwertigen Bits der Summanden S und C ignoriert. Zum Beispiel kann die Summe der beiden höchstwertigen Bits von S und C zwischen 0 und 5 liegen. Für die sechs möglichen Fälle sind die zugehörigen Werte A im Voraus berechnet worden und zwar wegen der Verwendung von A = 2 * A gleich multipliziert mit dem Faktor 2 also außer dem Wert 0 die Werte

$$R_1 = (\ 2 * 2^n)\ \text{mod}\ M$$

$$R_2 = (\ 4 * 2^n)\ \text{mod}\ M$$

$$R_3 = (\ 6 * 2^n)\ \text{mod}\ M$$

$$R_4 = (\ 8 * 2^n)\ \text{mod}\ M$$

$$R_5 = (10 * 2^n)\ \text{mod}\ M$$

Die zur Summe der beiden höchstwertigen Bits der Summanden S und C gehörende Klasse legt somit den Wert fest, der für A verwendet wird.

Als Summanden S und C werden dann die von den beiden höchstwertigen Bits befreiten Werte von S und C verwendet, wodurch die Reduktion der Bitlänge sichergestellt ist.

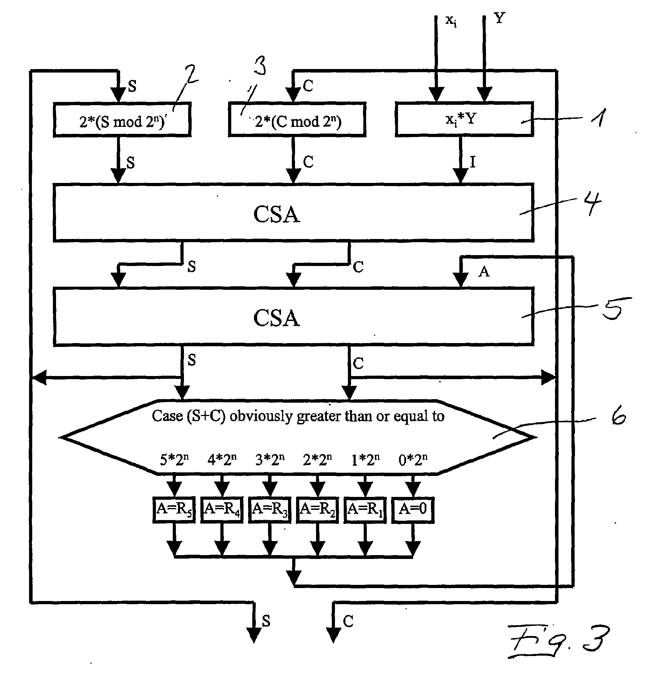

Das in Figur 3 dargestellte Flussdiagramm verdeutlicht den Aufbau eines entsprechenden Layouts zur Durchführung einer modularen Multiplikation.

In einer Multiplikationsstufe 1 werden die bitweise erstellten Zwischenprodukte I = $x_i$ * Y gebildet.

Reduktionsstufen 2 und 3 eliminieren die Bits mit der Wertigkeit > $2^n$ und führen die so gebildeten Summanden S und C zusammen mit dem Zwischenprodukt I einem ersten Carry-Save-Addierer 4 zu.

Ein Carry-Save-Addierer 4 weist für jede Bitstelle drei Eingänge auf, und führt die Addition aus. Sind alle drei Eingangswerte 0, gibt der CSA 4 die Ausgangswerte 00 aus. Für den Fall 001 (Reihenfolge beliebig) entsteht der Ausgangswert 01 für die Eingangswerte 011 die Ausgangswerte 10 und für die Eingangswerte 111 die Ausgangswerte 11.

Der Trick dieser Anordnung besteht darin, dass keine Carry-Bits transportiert und berücksichtigt werden müssen.

Die so gebildeten Ausgangswerte C und S des CSA 4 bilden zwei Eingangswerte eines zweiten CSA 5, dem als dritter Eingangswert ein Wert A zugeführt wird. Der Wert A wird in einer Bewertungsstufe 6 gebildet, in der die Ausgangswerte S und C des zweiten CSA 5 bewertet werden. Hierzu werden die beiden höchstwertigen Bits des Wertes S und des Wertes C addiert und dann geprüft, ob die Summe von S + C offensichtlich größer oder gleich 0 * $2^n$, 1 * $2^n$ ... 5 * $2^n$ ist. Entsprechend der so festgestellten Größenklasse wird als Wert A der Wert 0 oder einer der vorberechneten Werte $R_1$ bis $R_5$ dem zweiten CSA 5 für den nächsten Rechenzyklus zugeführt. Am Ende der Berechnung bilden die Werte S + C das gesuchte Ergebnis.

Das in den Figuren 2 und 3 dargestellte Verfahren wird von der vorliegenden Erfindung nicht umfasst.

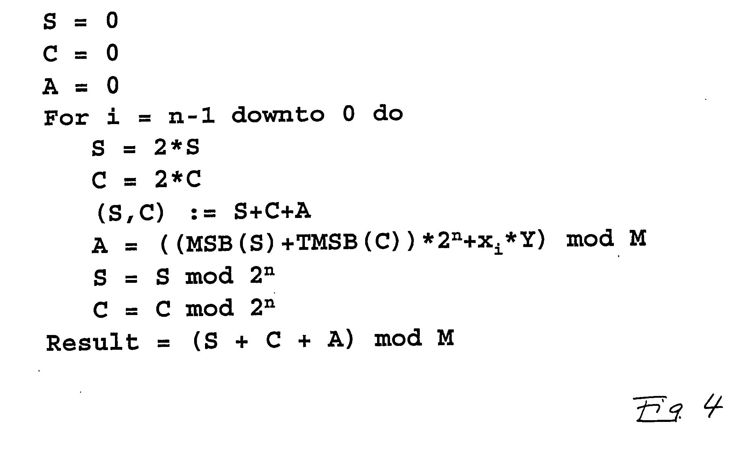

Gemäß des in Figur 4 dargestellten erfindungsgemäßen Algorithmus werden die beiden Additionen "+I" und "+A" zusammengefasst, indem der Korrekturwert A so gewählt wird, dass er die Addition "+I", die die Addition des Teilproduktes "$X_i$*Y" bedeutet, mit enthält.

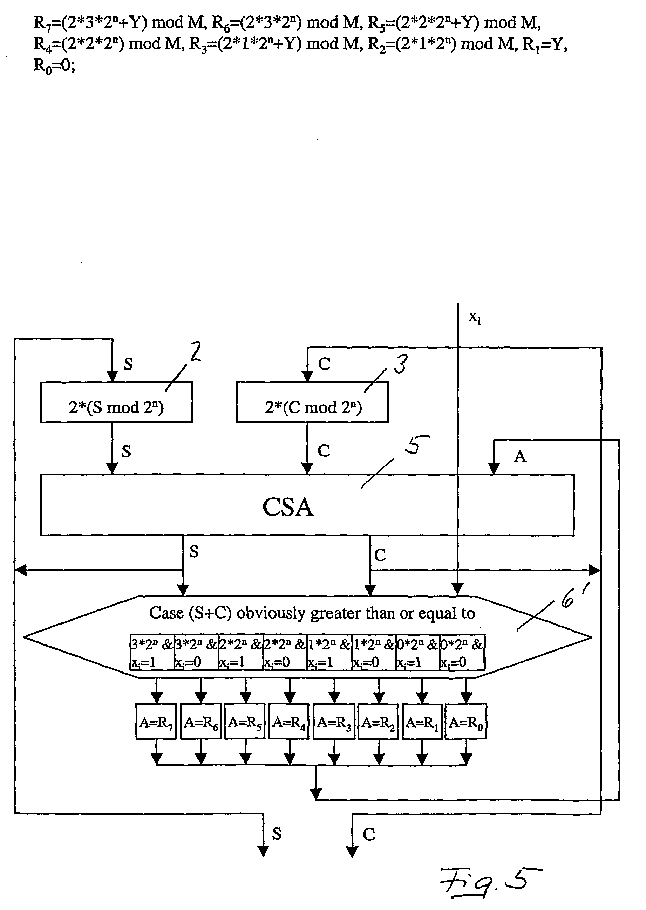

Wie Figur 5 verdeutlicht, dass nämlich für die Bildung des Teilproduktes "$X_i$*Y" zusammengefasst, indem der Korrekturwert A so gewählt wird, dass er die Addition "+I", die die Addition des Teilproduktes "$X_i$*Y" bedeutet, mit enthält.

Wie Figur 5 verdeutlicht, dass nämlich für die Bildung des Teilproduktes "$x_i$*Y" Binärzahlen lediglich unterschieden werden, ob $x_i$ = 0 oder $x_i$ = 1 ist. Demgemäß kann das Teilprodukt $x_i$ *Y nur 0 oder Y sein. Für die Durchführung der Rechenaufgabe können daher die Korrekturwerte A die Größen $R_0$ - $R_7$ sein. Diese acht möglichen Korrekturwerte werden vor der Anwendung des Algorithmus berechnet und stehen als vorberechnete Korrekturwerte A zur Verfügung und werden gemäß der Abschätzung in der Bewertungsstufe 6', die der Abschätzung in der Bewertungsstufe 6 gemäß Figur 2 entspricht, unter Berücksichtigung der Fallunterscheidung $x_i * Y = 0$ oder $X_i * Y = Y$ ermittelt. In diesem Fall kann die Summe der beiden höchstwertigen Bits der Werte S und C nur zwischen $0*2^n$ und $3*2^n$ liegen, woraus sich die acht möglichen Korrekturwerte A ergeben.

Durch den in den Figuren 4 und 5 dargestellten erfindungsgemäßen Algorithmus lässt sich somit die Multiplikationsstufe 1 und der CSA 4 aus Figur 3 einsparen.

Es ist ersichtlich, dass bei der Verwendung eines auf einer höheren Basis (beispielsweise 8) beruhenden Digitalzahlensystems die Anzahl der vorberechneten Korrekturwerte A entsprechend erhöht wird, da das Produkt $x_i * Y$ in diesem Fall eine größere Fallunterscheidung benötigt.

Da das erfindungsgemäße Verfahren - abgesehen von nicht ins Gewicht fallenden Nebenrechnungen mit kleinen Zahlen - mit einer Rechenschleife auskommt, halbiert sich die Rechenzeit gegenüber dem bisher als günstigsten Verfahren angesehenen Montgomery-Verfahren.

## Patentansprüche

1. Verfahren zur Durchführung einer Multiplikation modulo-M von zwei bezüglich einer Basis m n-stelligen Digitalzahlen (X, Y) mittels einer integrierten Schaltung, wobei $M < m^n$; X, Y < M ist, mit dem Verfahrensschritt:

    - Definition von zu einer vorgegebenen Anzahl höchstwertiger Stellen gehörenden Größenklassen und Vorberechnung von m modulo- M-Werten (A) für jede Größenklasse, die aus der Summe jeweils einer der Werte 0, Y, ... , (m- 1) *Y und dem der Größenklasse entsprechenden Vielfachen von $m^n$ bestehen

    und den iterativen Verfahrensschritten:

    - Addition des Wertes (A) zu einer Zwischensumme zur Bildung eines Additionsergebnisses (in 5), wobei der Wert (A) zur Durchführung der modulo-Operation des Durchlaufs (i) durch Vergleich der höchstwertigen Stellen der Zwischensumme mit den gebildeten Größenklassen und in Abhängigkeit von der dem i-ten Durchlauf entsprechenden Ziffer des Operanden $x_i$ ausgewählt wird;
    - Verwendung der von den höchstwertigen Stellen befreiten letzten n-Stellen dieses Additionsergebnisses zur Multiplikation mit m zur Bildung einer neuen Zwischensumme für die Addition (5) im nächsten Durchlauf (i-1)

    sowie

    - Ausgabe der für den letzten Durchlauf (i = 0) bei der Addition (5) gebildeten Zwischensumme als Resultat.

2. Verfahren nach Anspruch 1, bei dem die Rechnung mit Binärzahlen (m=2) erfolgt.

3. Verfahren nach Anspruch 2, bei dem der Vergleich mit der Summe aus den beiden höchstwertigen Bits der Summanden (S und C) mit den Werten 0 bis 5 durchgeführt wird.

4. Integrierte Schaltung, ausgebildet zur Durchführung einer Multiplikation modulo M nach dem Verfahren nach einem der Ansprüche 1 bis 3, enthaltend eine Stufe zur Bildung der Teilprodukte (I), einen Addierer (5) und eine Bewertungsstufe (6) zur Bildung einer Summe der höchstwertigen Stellen der Summanden und Auswahl eines vorberechneten Korrekturwertes (A).

5. Integrierte Schaltung nach Anspruch 4, bei der in der Bewertungsstufe die Summe der beiden höchstwertigen Stellen der Summanden (S und C) gebildet wird.

## Claims

1. Method for carrying out a modulo M multiplication of two n-digit digital numbers (X, Y) - relative to a base m - using an integrated circuit, where $M < m^n$; X, Y < M, said method having the following method step:

    - size classes belonging to a predefined number of most significant digits are defined and m modulo M values (A) are precalculated for each size class, which values comprise the sum of a respective one of the values 0, Y, ..., (m- 1) *Y and the multiple of $m^n$ corresponding to the size class,

    and having the following iterative method steps:

    - the value (A) is added to form a subtotal in order to form an addition result (in 5), the value (A) for carrying out the modulo operation in the iteration (i) being selected by comparing the most significant digits of the subtotal with the size classes formed and being selected on the basis of that digit of the operand $x_i$ which corresponds to the ith iteration;
    - the last n digits of this addition result which have been freed of the most significant digits are used for multiplication by m in order to form a new subtotal for the addition (5) in the next iteration (i-1),

and

- the subtotal formed during the addition (5) for the last iteration (i = 0) is output as the result.

2. Method according to Claim 1, in which the computation is effected using binary numbers (m=2) .

3. Method according to Claim 2, in which the comparison with the sum of the two most significant bits of the summands (S and C) is carried out using the values 0 to 5.

4. Integrated circuit designed for carrying out a modulo M multiplication in accordance with the method according to one of Claims 1 to 3, said circuit containing a stage for forming the partial products (I), an adder (5), and an assessment stage (6) for forming a sum of the most significant digits of the summands and for selecting a precalculated correction value (A).

5. Integrated circuit according to Claim 4, in which the sum of the two most significant digits of the summands (S and C) is formed in the assessment stage.

## Revendications

1. Procédé pour mettre en oeuvre une multiplication modulo-M de deux nombres digitaux (X, Y) à n positions par rapport à une base m, au moyen d'un circuit intégré dans lequel $M < m^n$ ; X, Y < M comprenant l'étape de procédé suivante :

- Définition de classes de grandeurs appartenant à un nombre prédéterminé de positions les plus élevée et précalcul de m valeurs de modulo-M (A) pour chaque classe de grandeurs qui, à partir de la somme de chacune des valeurs 0, Y, ..., (m- 1) *Y et celles des classes de grandeur représentent des multiples correspondantes de $m^n$,

et les étapes itératives de procédé suivantes :

- addition de la valeur (A) à une somme intermédiaire pour obtenir un résultat d'addition (in 5), dans lequel pour mettre en oeuvre l'opération modulo du cycle (i) la valeur (A) est choisie par comparaison des positions de valeurs les plus élevées de la somme intermédiaire avec les classes de grandeur obtenues et en fonction du chiffre correspondant au i-ème cycle de l'opérande $x_i$ ;
- utilisation du résultat de cette addition à partir des dernières positions n libérées parmi les positions de valeurs les plus élevées pour la multiplication avec m afin d'obtenir une nouvelle somme intermédiaire pour l'addition (5) dans le cycle suivant (i-1),

ainsi que

- la délivrance en tant que résultat de la somme intermédiaire obtenue par l'addition (5) pour le dernier cycle (i=0).

2. Procédé selon la revendication 1, dans lequel le calcul est effectué avec des nombres binaires (m=2).

3. Procédé selon la revendication 2 dans lequel la comparaison avec la somme à partir de deux sommations (S et C) de valeurs les plus élevées est mise en oeuvre avec les valeurs de 0 à 5.

4. Circuit intégré réalisé pour mettre en oeuvre une multiplication modulo-M suivant le procédé selon l'une des revendications 1 à 3, comprenant un étage pour obtenir le produit partiel (1), un additionneur (5), et un étage de valorisation (6) pour obtenir une somme des positions de valeurs les plus élevées des opérandes et choisir une valeur de correction précalculée (A).

5. Circuit intégré selon la revendication 4, dans lequel dans l'étage de valorisation est obtenue la somme des deux positions de valeurs les plus élevées des opérandes (S et C) de la somme.

# Interleaved Modular Multiplication

EP 1 508 087 B1

Y    X

$$\underline{0111 \ * \ 1011}$$

$$\underline{0000}$$

$$\underline{0111}$$

01110 > M?

$$\underline{0000}$$

1110 > M?

$$\underline{-1101}$$

00010

$$\underline{0111}$$

10010 > M?

$$\underline{0111}$$

11001 > M?

$$\underline{-1101}$$

$$\underline{1100}$$

P = 0

For i = n-1 downto 0 do

   P = 2P + $x_i$ * Y

    If P > M Then P = P - M

    If P > M Then P = P - M

Remainder = P

*Fig. 1*

# The new algorithm

```
S = 0
C = 0
A = 0
For i = n-1 downto 0 do                              {S<2^n,  C<2^n,  A<2^n}
    S = 2*S                                          {S<2*2^n}
    C = 2*C                                          {C<2*2^n}
    A = 2*A                                          {A<2*2^n}
    I = x_i*Y                                        {I<2^n}
    (S,C) := S+C+I
    (S,C) := S+C+A                                   {S<4*2^n,  C<7*2^n}
    A = ((TMSB(S)+TMSB(C))*2^n) mod M                {A<2^n}
    S = S mod 2^n                                    {S<2^n}
    C = C mod 2^n                                    {C<2^n}
Result = (S + C + A) mod M
```

*Fig. 2*

EP 1 508 087 B1

$x_i$    Y

S        C

| 2*(S mod $2^n$) | 2*(C mod $2^n$) | $x_i$*Y |

2    3    1

S        C        I

CSA    4

S        C        A

CSA    5

S        C

Case (S+C) obviously greater than or equal to    6

$5*2^n$    $4*2^n$    $3*2^n$    $2*2^n$    $1*2^n$    $0*2^n$

| A=$R_5$ | A=$R_4$ | A=$R_3$ | A=$R_2$ | A=$R_1$ | A=0 |

S        C

Fig. 3

```
S = 0
C = 0
A = 0
For i = n-1 downto 0 do
    S = 2*S
    C = 2*C
    (S,C) := S+C+A
    A = ((MSB(S)+TMSB(C))*2^n+x_i*Y) mod M
    S = S mod 2^n
    C = C mod 2^n
Result = (S + C + A) mod M
```

Fig. 4

$R_7=(2*3*2^n+Y) \bmod M$, $R_6=(2*3*2^n) \bmod M$, $R_5=(2*2*2^n+Y) \bmod M$, $R_4=(2*2*2^n) \bmod M$, $R_3=(2*1*2^n+Y) \bmod M$, $R_2=(2*1*2^n) \bmod M$, $R_1=Y$, $R_0=0$;

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6151393 A